# EUROPÄISCHE PATENTSCHRIFT

(11) **EP 2 821 266 B1**
(45) Veröffentlichungstag und Bekanntmachung des Hinweises auf die Patenterteilung: **13.01.2021**
(21) Anmeldenummer: 14000890.5
(22) Anmeldetag: 12.03.2014
(51) Int. Cl.: B60H 1/00, B60H 1/24

(54) **Klimaanlage zur Installation im Außenbereich eines Kraftfahrzeugs, insbesondere Bus-Klimaanlage auf einem Busdach**
Air conditioning system for installation in the external area of a motor vehicle, in particular bus air conditioning system on a bus roof
Installation de climatisation pour montage à l'extérieur d'un véhicule automobile, notamment installation de climatisation de bus sur le toit d'un bus

(30) Priorität: 06.07.2013 DE 102013011314
(43) Veröffentlichungstag der Anmeldung: 07.01.2015
(73) Patentinhaber: MAN Truck & Bus SE, 80995 München (DE)
(72) Erfinder: Ginsberg, Lutz, 70794 Filderstadt (DE); Schönherr, Stephan, 86153 Augsburg (DE)
(74) Vertreter: Liebl, Thomas

(56) Entgegenhaltungen:
- EP-A1- 2 596 978
- DE-A1- 3 711 180
- DE-A1- 10 021 807
- DE-A1- 10 101 770

## Beschreibung

Klimaanlagen im Außenbereich von Kraftfahrzeugen, insbesondere Bus-Klimaanlagen auf einem Busdach sind allgemein bekannt. Solche Klimaanlagen weisen eine Kühlvorrichtung mit einem Verdichter für einen Kühlmittel-Kreisprozess auf und sind mit einer Klimaanlagenverkleidung zur Außenseite hin abgedeckt. Insbesondere sind solche Klimaanlagen als gegebenenfalls nachrüstbare Klimageräte mit einer langgestreckten, flachen und die Dachbreite weitgehend überdeckenden Form bekannt, wobei die Klimaanlagenverkleidung als von oben her aufgesetzte Klimaanlagenhaube ausgebildet ist.

Zudem ist es bereits bekannt, eine Klimaanlage (DE 197 46 151 A1) mit Verdichter durch Solarenergie zu betreiben, wobei die Solarzellen an einer nicht weiter definierten Stelle eines Fahrzeugs angebracht sind. Für den Betrieb eines Klimakompressors reicht aber regelmäßig die von den Solarzellen an einem Fahrzeug zu erhaltenden Energie für einen längeren Betrieb nicht aus.

Weiter ist eine Vorrichtung zur Standklimatisierung eines Kraftfahrzeuginnenraums bekannt (DE 10 2005 061 603 A1), wobei eine Belüftungs- und Entlüftungsvorrichtung für den Fahrzeuginnenraum einen elektrisch mit einer Fahrzeugbatterie angetriebenen Lüfter aufweist, und die Fahrzeugbatterie mit Solarenergie aufgeladen wird. Eine ähnliche Anlage, die insbesondere zur Temperaturabsenkung bei einem Stillstand des Fahrzeugs verwendet wird, ist in Verbindung mit einer Klimaanlage mit Klimaverdichter beschrieben (DE 197 46 152 A1). Die Klimaanlage und die Belüftungs- und Entlüftungsvorrichtung sind zwar hier im selben Kraftfahrzeug angeordnet, haben aber sonst weder einen örtlichen noch einen funktionellen Bezug untereinander.

Derzeit werden höherwertige Personenkraftfahrzeuge in allgemein bekannter Weise mit Klimaanlagen mit einer Kühlvorrichtung mit einem Verdichter für einen Kühlmittel-Kreisprozess ausgerüstet. Solche Klimaanlagen sind von außen nicht sichtbar im Motorraum angeordnet. Weiter können als Sonderausstattung zum Lüften und Abkühlen des Innenraums im Stand sogenannte Solar-Schiebehebedächer eingebaut werden. Bei solchen allgemein bekannten Solar-Schiebehebedächern erzeugen ins Schiebedach integrierte Solarzellen Strom, mit welchem ein fahrzeugeigenes Gebläse im geparkten Fahrzeug kontinuierlich angetrieben wird. Dies funktioniert - solange die Sonne scheint - sowohl bei geschlossenem als auch bei ausgestelltem Dachdeckel und bedarf keiner manuellen Aktivierung des Systems. Als Vorteile werden dabei insbesondere die Kühlung und Lüftung des Innenraums bei sommerlichen Bedingungen mit einer Absenkung der Fahrzeuginnenraumtemperatur angegeben. Auch im Winter wird bei geringer Sonneneinstrahlung durch einen leichten Luftstrom der Innenraum entfeuchtet und so das Beschlagen der Scheiben reduziert. Weiter werden durch den solarbetriebenen Gebläselüfter Kanäle und Komponenten der Klimaanlage getrocknet, wodurch einer Bildung von Mikroorganismen entgegengewirkt wird. Zudem werden bei sommerlichen Bedingungen durch ein reduziertes Innenraum-Temperaturniveau vor dem Starten des Fahrzeugs die Klimaanlagenlaufzeit und damit der Treibstoffverbrauch reduziert. Ein Zusammenhang zwischen einem Solar-Schiebehebedach und der Klimaanlage besteht aber nicht. Die Solarzellen sind hier in den Deckel des Schiebe-Hebedachs integriert, wodurch zusätzlich zur Schiebe- und Hebedachfunktion die weitere Funktion für eine Stromerzeugung hinzukommt.

Aus der DE 37 11 180 A1 ist ein Omnibus mit einer Solaranlage bekannt, bei der die Solaranlage auf das Wagendach aufgesetzt ist. Von der Solaranlage sind Verbindungsleitungen zu den direkt zum Beispiel unter einer Dachhutze befindlichen Aggregaten, wie Luftumwälzgebläse und/oder Klimaanlage, geführt. Die Solaranlage kann ausschiebbare bzw. ausklappbare Module aufweisen, ebenso wie Reinigungsvorrichtungen.

Die DE 100 21 807 A1 betrifft ein Dachmodul für ein Kraftfahrzeug, bei dem das Dachmodul eine Solarzellenfläche mit einer durch den von der Solarzellenfläche erzeugten Solarstrom betriebenen Entlüftungseinrichtung aufweist.

Ausgehend von einer gattungsgemäßen Klimaanlage im Außenbereich eines Kraftfahrzeugs, insbesondere von einer Bus-Klimaanlage auf einem Busdach wird die Aufgabe der Erfindung darin gesehen, eine solche Klimaanlage mit einer weiteren Funktion zu versehen.

Diese Aufgabe wird gelöst mit den Merkmalen der unabhängigen Patentansprüche. Vorteilhafte Ausgestaltungen und Gegenstand der Unteransprüche.

Gemäß Anspruch 1 ist vorgesehen, dass die Außenhaut der Klimaanlagenverkleidung zur Erzeugung von Solarstrom als Solarzelle ausgebildet ist. Zudem weist eine solche Klimaanlage im Außenbereich eine Belüftungs- und Entlüftungsvorrichtung für den Fahrzeuginnenraum mit wenigstens einer elektrisch angetriebenen Lüftereinheit auf. Diese wenigstens eine Lüftereinheit der Belüftungs- und Entlüftungsvorrichtung wird direkt oder indirekt durch den erzeugten Solarstrom betrieben. Erfindungsgemäß ist vorgesehen, dass die als Klimaanlagenhaube ausgebildete Verkleidung aus wenigstens einer, in einem selbstragenden Formteil integrierten Solarzelle besteht, die als homogenes ganzheitliches Formteil tiefgezogen i und mit einem Trägermaterial hinterschäumt oder hinterlaminiert ist.

Eine solchen Klimaanlagenhaube weist vorteilhaft drei Funktionen auf: die eines Abdeckteils, die eines Tragteils und die einer Stromerzeugungseinrichtung.

Damit wird vorteilhaft die Klimaanlagenverkleidung mit ihrer Außenhaut nicht nur zum Schutz und zur Abdeckung der Klimaanlage verwendet, sondern zugleich für eine Solarstromerzeugung genutzt. Durch die Integration der Belüftungs- und Entlüftungsvorrichtung in die Klimaanlage erhält diese vorteilhaft eine weitere Funktion mit einem kompakten raumersparenden Anlagenaufbau.

Durch diese Zusatzfunktion der Klimaanlage mit der Belüftungs- und Entlüftungsvorrichtung kann eine angenehme Innenraumtemperierung auch im Fahrzeugstand bei großer Hitze erreicht werden mit einer angenehmen Absenkung der Innenraum-Temperatur im Vergleich zu einem unbelüfteten Innenraum. Zudem kann permanent frische Umgebungsluft im Fahrzeuginnenraum auch während der Fahrt erzeugt werden und gegebenenfalls kann die Innenraumluft entfeuchtet werden. Durch die Reduzierung der Innenraumtemperatur mittels der Belüftungs- und Entlüftungsvorrichtung können die Laufzeit der Klimaanlage und damit der Treibstoffverbrauch reduziert werden.

Ein besonders vorteilhafter kompakter und kostengünstiger Aufbau ergibt sich, wenn die Solarstromerzeugung mit Solarzellen auf einer Klimaanlagenhaube eines Klimageräts erfolgt, das im Außenbereich des Kraftfahrzeugs vorzugsweise auf einem Fahrzeugdach installiert ist.

In einer bevorzugten Ausführungsform der Erfindung sind die Klimaanlage und die Belüftungs- und Entlüftungsvorrichtung in einer Busdach-Klimaanlageneinheit enthalten. Damit kann sowohl die Kühlung mittels der Klimaanlage als auch der Luftstrom durch die Belüftungs- und Entlüftungsvorrichtung vorteilhaft von oben durch das Busdach effektiv und strömungsgünstig in den Businnenraum geleitet werden. Alle erforderlichen Funktionen können einschließlich der Solarzellen von vorn herein in einem Gerät, beispielsweise bei einer Zulieferfirma eingebaut werden, sodass damit der Montageaufwand beim Fahrzeughersteller vorteilhaft minimal ist.

Die Steuerung der Belüftungs- und Entlüftungsvorrichtung gegebenenfalls in Verbindung mit der Klimaanlage kann je nach den Gegebenheiten und bedarfsweise vorgenommen werden, wobei die Steuerung insbesondere in Abhängigkeit der Fahrzeuginnentemperatur und/oder der Außentemperatur und/oder Sonneneinstrahlung während der Fahrt und/oder im Stand ein- und ausschaltbar ist.

Zweckmäßig wird der erzeugte Solarstrom direkt dem Antrieb der Lüftereinheiten der Belüftungs- und Entlüftungsvorrichtung zugeführt. Alternativ und gegebenenfalls zusätzlich kann der Solarstrom auch einer Batterie zugeführt werden, mittels der dann die Belüftungs- und Entlüftungsvorrichtung betrieben wird. Zuviel erzeugter Solarstrom, der von der Belüftungs- und Entlüftungsvorrichtung nicht verbraucht wird, wird zweckmäßig der Kühlvorrichtung und/oder einem Speichersystem im Fahrzeug, zum Beispiel der Bordnetzbatterie zugeführt. Anhand einer Zeichnung wird die Erfindung weiter erläutert.

Es zeigen:
- Fig. 1: eine schematische perspektivische Darstellung eines Reisebusses mit einer Bus-Klimaanlage auf dem Busdach, und
- Fig. 2: einen schematischen Querschnitt durch diese Bus-Klimaanlage.

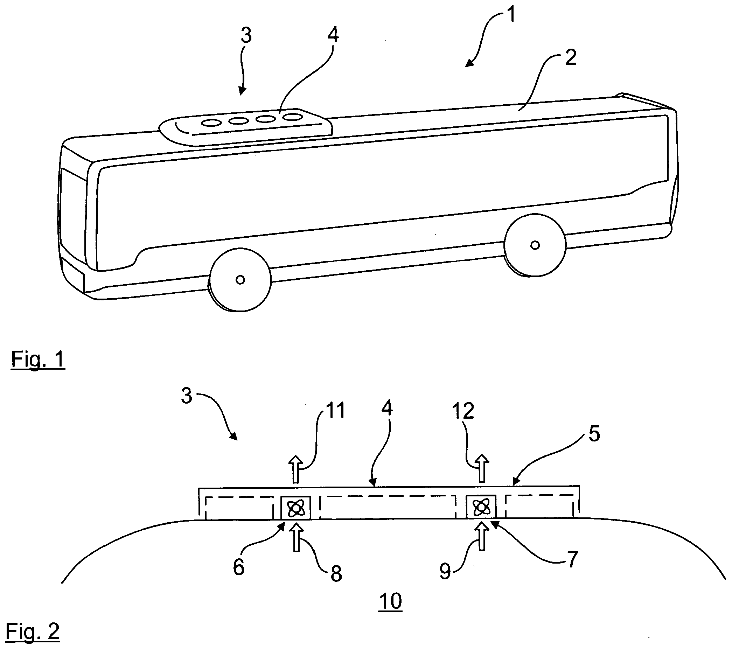

In Fig. 1 ist perspektivisch und schematisch ein Bus 1, zum Beispiel ein Reisebus, dargestellt mit einem Busdach 2, auf dem im vorderen Bereich eine Klimaanlage 3 als Klimagerät angeordnet ist. Die Klimaanlage 3 hat eine langestreckte, flache Kastenform, welche sich über die Dachbreite erstreckt. Die obere Klimaanlagenverkleidung 4 ist als aufgesetzte Klimaanlagenhaube ausgebildet, die ein selbstragendes, tiefgezogenenes, mit einem Trägermaterial hinterschäumtes oder hinterlaminiertes Formteil ist, in dem Solarzellen integriert sind.

Der mit den Solarzellen 5 erzeugte Solarstrom wird einer Belüftungs- und Entlüftungsvorrichtung zugeführt, die hier schematisch durch zwei elektrisch angetriebene Lüfter 6 und 7 dargestellt ist. Der übrige Bereich unter der Klimaanlagenhaube wird von den herkömmlichen Bauteilen der Klimaanlage, insbesondere auch von einem Verdichter für einen Kühlmittelprozess eingenommen.

Mit den Lüftern 6 und 7 wird im dargestellten Sommerbetrieb bei ausreichend erzeugtem Solarstrom warme Innenraumluft (Pfeile 8, 9) aus dem Businnenraum nach außen über die Klimaanlagenhaube befördert (Pfeile 11, 12).

### Bezugszeichenliste

- 1: Bus
- 2: Busdach
- 3: Klimaanlage
- 4: Klimaanlagenverkleidung
- 5: Solarzellen
- 6: Lüfter
- 7: Lüfter
- 8: Pfeil
- 9: Pfeil
- 10: Businnenraum
- 11: Pfeil
- 12: Pfeil

## Patentansprüche

1. Klimaanlage zur Installation im Außenbereich eines Kraftfahrzeugs, insbesondere Bus-Klimaanlage (3) auf einem Busdach (2),
mit einer Außenhaut einer Klimaanlagenverkleidung (4),
wobei die Klimaanlage (3) eine Kühlvorrichtung mit einem Verdichter für einen Kühlmittel-Kreisprozess aufweist,
wobei die Außenhaut der Klimaanlagenverkleidung (4) zur Erzeugung von Solarstrom als Solarzelle (5) ausgebildet ist,
wobei die Klimaanlage (3) zudem eine Belüftungs- und Entlüftungsvorrichtung für den Fahrzeuginnenraum (10) mit wenigstens einer elektrisch angetriebenen Lüftereinheit (6, 7) aufweist,
wobei die wenigstens eine Lüftereinheit (6, 7) der Belüftungs- und Entlüftungsvorrichtung direkt oder indirekt durch den erzeugten Solarstrom betrieben wird, und
wobei die Außenhaut der Klimaanlagenverkleidung (4) eine Klimaanlagenhaube eines Klimageräts (3) ist,
**dadurch gekennzeichnet,**
**dass** die Klimaanlagenhaube aus wenigstens einer in ein selbsttragendes Formteil integrierten Solarzelle (5) besteht, die als homogenes, ganzheitliches Formteil tiefgezogen ist, wobei die wenigstens eine Solarzelle (5) mit einem Trägermaterial hinterschäumt oder hinterlaminiert ist.

2. Klimaanlage nach Anspruch 1, **dadurch gekennzeichnet,**
**dass** für die Belüftungs- und Entlüftungsvorrichtung (6, 7) eine Steuerung vorgesehen ist, mit der diese in Abhängigkeit der Fahrzeuginnentemperatur und/oder Außentemperatur und/oder Sonneneinstrahlung bedarfsweise während der Fahrt und/oder im Stand ein- und ausschaltbar ist.

3. Klimaanlage nach Anspruch 1 oder 2, **dadurch gekennzeichnet,**
**dass** der Belüftungs- und Entlüftungsvorrichtung (6, 7) der Solarstrom direkt zum Antrieb zugeführt wird.

4. Klimaanlage nach Anspruch 1 oder 2, **dadurch gekennzeichnet,**
**dass** der Solarstrom einer Batterie zugeführt wird, über die die Belüftungs- und Entlüftungsvorrichtung (6, 7) betrieben wird.

5. Klimaanlage nach einem der vorhergehenden Ansprüche, dafür ausgelegt, dass zuviel von der Belüftungs- und Entlüftungsvorrichtung (6, 7) erzeugter, nicht verbrauchter Solarstrom der Kühlvorrichtung und/oder einem Speichersystem im Fahrzeug zugeführt wird.

6. Fahrzeug, insbesondere Nutzfahrzeug und/oder Bus, mit einer Klimaanlage nach einem der vorhergehenden Ansprüche.

7. Busdach-Klimaanlageneinheit, enthaltend eine Klimaanlage nach einem der Ansprüche 1 bis 5. Z

## Claims

1. An air-conditioning system for installation in the external area of a motor vehicle, in particular a bus air-conditioning system (3) on a bus roof (2),
with an outer skin of an air-conditioning system cladding (4), wherein the air conditioning system (3) has a cooling device with a compressor for a coolant circulating process,
wherein the outer skin of the air-conditioning system cladding (4) is designed as a solar cell (5) for generating solar power,
wherein the air-conditioning system (3) also has a ventilating and venting device for the vehicle interior (10) with at least one electrically driven fan unit (6, 7),
wherein the at least one fan unit (6, 7) of the ventilating and venting device is operated directly or indirectly by the solar power generated, and
wherein the outer skin of the air-conditioning system cladding (4) is an air-conditioning system hood of an air-conditioning unit (3),
**characterized**
**in that** the air-conditioning system hood consists of at least one solar cell (5) which is integrated in a self-supporting moulded part and is thermoformed as a homogeneous, all-in-one moulded part,
wherein the at least one solar cell (5) is provided with a foam or laminate backing material.

2. The air-conditioning system according to Claim 1, **characterized**
**in that** a controller is provided for the ventilating and venting device (6, 7), with which this device can be switched on and off as and when required during travel and/or when stationary in dependence on the temperature inside the vehicle and/or the outside temperature and/or solar radiation.

3. The air-conditioning system according to Claim 1 or 2, **characterized**
**in that** the ventilating and venting device (6, 7) is fed to the solar power directly to drive it.

4. The air-conditioning system according to Claim 1 or 2, **characterized**
**in that** the solar power is fed to a battery, by way of which the ventilating and venting device (6, 7) is operated.

5. The air-conditioning system according to one of the preceding claims, designed
such that unconsumed solar power, generated in excess by the ventilating and venting device (6, 7), is fed to the cooling device and/or a storage system in the vehicle.

6. A vehicle, in particular a commercial vehicle and/or a bus, with an air-conditioning system according to one of the preceding claims.

7. A bus-roof air-conditioning system unit, comprising an air-conditioning system according to one of Claims 1 to 5.

## Revendications

1. Installation de climatisation destinée à être installée dans la zone extérieure d'un véhicule automobile, notamment installation de climatisation de bus (3) sur un toit de bus (2),
munie d'un revêtement extérieur d'un habillage d'installation de climatisation (4),
l'installation de climatisation (3) comprenant un dispositif de refroidissement muni d'un compresseur pour un processus cyclique d'agent de refroidissement,
le revêtement extérieur de l'habillage d'installation de climatisation (4) étant configuré sous la forme d'une cellule solaire (5) pour la génération d'un courant solaire,
l'installation de climatisation (3) comprenant en outre un dispositif d'aération et de ventilation pour l'espace intérieur de véhicule (10) muni d'au moins une unité de ventilateur entraînée électriquement (6, 7),
ladite au moins une unité de ventilateur (6, 7) du dispositif d'aération et de ventilation étant exploitée directement ou indirectement par le courant solaire généré, et
le revêtement extérieur de l'habillage d'installation de climatisation (4) étant un capot d'installation de climatisation d'un appareil de climatisation (3),
**caractérisée en ce que**
le capot d'installation de climatisation est constitué par au moins une cellule solaire (5) intégrée dans une pièce moulée autoporteuse, qui est emboutie profondément sous la forme d'une pièce moulée homogène uniforme,
ladite au moins une cellule solaire (5) étant surmoussée ou surstratifiée avec un matériau support.

2. Installation de climatisation selon la revendication 1, **caractérisée en ce qu'**une commande est prévue pour le dispositif d'aération et de ventilation (6, 7), avec laquelle celui-ci peut être activé et désactivé au besoin en marche et/ou à l'arrêt en fonction de la température intérieure du véhicule et/ou de la température extérieure et/ou du rayonnement du soleil.

3. Installation de climatisation selon la revendication 1 ou 2, **caractérisée en ce que** le courant solaire est acheminé directement pour l'entraînement vers le dispositif d'aération et de ventilation (6, 7).

4. Installation de climatisation selon la revendication 1 ou 2, **caractérisée en ce que** le courant solaire est acheminé vers une batterie, par l'intermédiaire de laquelle le dispositif d'aération et de ventilation (6, 7) est exploité.

5. Installation de climatisation selon l'une quelconque des revendications précédentes, conçue de telle sorte que le courant solaire non consommé, généré en excès par le dispositif d'aération et de ventilation (6, 7), est acheminé vers le dispositif de refroidissement et/ou un système de stockage dans le véhicule.

6. Véhicule, notamment véhicule utilitaire et/ou bus, muni d'une installation de climatisation selon l'une quelconque des revendications précédentes.

7. Unité d'installation de climatisation pour toit de bus, contenant une installation de climatisation selon l'une quelconque des revendications 1 à 5.
